# EUROPÄISCHE PATENTSCHRIFT

(11) **EP 3 179 278 B1**
(45) Veröffentlichungstag und Bekanntmachung des Hinweises auf die Patenterteilung: **19.09.2018**
(21) Anmeldenummer: 15199628.7
(22) Anmeldetag: 11.12.2015
(51) Int. Cl.: G01V 8/10, F16P 3/14

(54) **SICHERHEITSSENSOR**
SECURITY SENSOR
CAPTEUR DE SECURITE

(43) Veröffentlichungstag der Anmeldung: 14.06.2017
(73) Patentinhaber: SICK AG, 79183 Waldkirch (DE)
(72) Erfinder: Dreher, Felix, 79350 Sexau (DE); Vollmer, Dr. Patrick, 79183 Waldkirch (DE)

(56) Entgegenhaltungen:
- EP-A1- 2 853 929
- DE-B4- 10 201 894
- DE-U1-202007 019 467
- US-A1- 2010 127 158
- US-A1- 2012 036 493

## Beschreibung

Die vorliegende Erfindung betrifft einen Sicherheitssensor nach dem Oberbegriff von Anspruch 1.

Eine wesentliche Herausforderung für die Entwicklung neuer Sicherheitssensoren, besonders solcher eines oberen Leistungssegments, und deren erfolgreiche Platzierung am Markt liegt darin, für möglichst wenig zusätzliche Kosten signifikanten Mehrnutzen für Kunden zu generieren, um sich so vom Wettbewerb abzuheben.

Ein wesentlicher Trend im Zusammenhang mit Industrie 4.0 ist die Dezentralisierung einer Datenverarbeitung oder einer Datenvorverarbeitung in industriellen Anlagen. Es ist zunehmend weder organisatorisch sinnvoll noch technisch effizient möglich, eine Flut von durch unzählige Sensoren erhobenen Daten rein zentral zu erfassen und zu verwalten.

Ein Beispiel dafür sind einfache Lichtschranken, die zum Zählen von Lichtwegunterbrechungen, beispielsweise durch schnell durch den Lichtweg fallendes Material, eingesetzt werden. Bei entsprechend hoher Schaltfrequenz ist es sehr aufwändig, klassisch das binäre Lichtweg-Zustandssignal über eine Schaltleitung an die zentrale Anlagensteuerung zu melden, dort über einen sehr hochfrequent abgetasteten und damit teuren und störanfälligen Eingang einzulesen und in einem Steuerprogramm einen Zähler bei Flankenerkennung zu inkrementieren.

Bekannt sind Sicherheitslichtvorhänge mit verschiedenen Stufen der Komplexität von Schutzfeld-Auswertungsfunktionen, wobei diese Schutzfeldauswertungen stets im Wesentlichen sicherheitsgerichtet, beispielsweise zweikanalig erfolgen und das Ergebnis über eine geeignete Sicherheitsschnittstelle, beispielsweise über ein OSSD-Signal oder ein sicheres Bussystem ausgegeben wird. Nur einfachste nicht sichere Zusatzinformationen, beispielsweise Verschmutzungswarnungen werden nach dem Stand der Technik von Sicherheitslichtvorhängen zusätzlich über nicht sicherheitsgerichtete Schnittstellen ausgegeben.

Bekannt sind weiterhin einfache nicht sicherheitsgerichtete Sensoren mit fest vorgegebener oder geringfügig konfigurierbarer Datenvorverarbeitung, beispielsweise das Zählen von Lichtwegunterbrechungen in Lichtschranken und Ausgabe bzw. Abrufbarkeit der vorverarbeiteten Daten über kostengünstige, niedrig performanten Schnittstellen, insbesondere IO-Link.

Werden umfangreiche Sensordaten eines Sicherheitssensors, beispielsweise Strahldaten eines Sicherheitslichtgitters, wie bisher teilweise angestrebt, vollständig zur kundenspezifischen Verarbeitung in einer Steuerung ausgegeben, so ist dafür eine sehr hoch performante und damit teure Datenschnittstelle notwendig. Verschärft wird dieser Umstand noch, wenn die Daten sicherheitsgerichtet ausgegeben werden, da dann erheblicher Overhead zum Sicherstellen der Datenintegrität die Datenmenge über die eigentlichen Nutzdaten hinaus notwendig ist. Nicht zuletzt erfordert das vollständige zweikanalige Aufbereiten der auszugebenden Daten im Sensor in diesem Fall eine sehr leistungsfähige zweikanalige Hardware. Damit wird solch eine Lösung i. d. R. wirtschaftlich uninteressant im Vergleich zum parallelen Einsatz eines einfachen Sicherheitssensors und eines weiteren Automatisierungssensors.

Beispielsweise sind nach dem Stand der Technik in einigen Anwendungen in unmittelbarer Nähe zueinander sichere und nicht sichere Sensoren angeordnet, die gleiche oder sehr ähnliche Informationen erfassen, wobei jedoch die Signale der sicheren Sensoren nur für den Personenschutz und die nicht sicheren Sensoren nur für Automatisierungsfunktionen genutzt werden. Die Sicherheitssensoren dienen nur dem Schutz gegen Einquetschen von Körperteilen. Die Automatisierungslichtgitter nur zur Vermessung der eingebrachten Waren bzw. Behälter. Im schlimmsten Fall könnten sich die Sensoren sogar untereinander stören.

Die EP 2 853 929 A1 offenbart einen optoelektronischen Sicherheitssensor mit einer integrierten speicherprogrammierbaren Steuerung zur logischen Auswertung von logischen Zustandsgrößen, die aus Messsignalen abgeleitet sind.

Die DE 102 01 894 B4 offenbart ein Sensorsystem mit einem Gegenstandserfassungssensor, wobei Daten in den Gegenstandserfassungssensor einlesbar sind, wobei die Steuereinrichtung des Gegenstandserfassungssensors eine programmierbare Logikeinheit aufweist, durch die die von dem Sensor eingelesenen Daten in einer vom Anwender frei wählbaren Weise logisch verknüpfbar sind. Weitere Offenbarungen zum Stand der Technik sind in den Dokumenten DE 20 2007 019467, US 2010/127158 und US 2012/036493 zu finden.

Eine Aufgabe der Erfindung besteht darin, für sehr geringe Mehrkosten in Sicherheitssensoren eine flexible Lösung zur dezentralen Vorverarbeitung nicht sicherheitsgerichteter Zusatzdaten für Automatisierungszwecke bereitzustellen und dadurch einen verbesserten Sicherheitssensor bereitzustellen, wobei die Zusatzdaten einfach zur Verfügung gestellt werden.

Die Aufgabe wird gemäß Anspruch 1 gelöst durch einen Sicherheitssensor, mit mindestens einer ersten Auswerteeinheit mit einem ersten Auswerteprogramm und mindestens einer zweiten Auswerteeinheit mit einem zweiten Auswerteprogramm, wodurch ein zweikanaliges System gebildet wird, wobei jede Auswerteeinheit mit einem Arbeitsspeicher verbunden ist und jede Auswerteeinheit einen Programmspeicher aufweist, wobei zwischen den Auswerteeinheiten ein bidirektionaler Kommunikationskanal angeordnet ist, wodurch ein Quervergleich der Auswerteergebnisse zwischen den Auswerteeinheiten durchführbar ist, wobei in mindestens einem der beiden Programmspeicher und/oder in einem der beiden Arbeitsspeicher ein Anwenderprogramm ablegbar ist, wobei mindestens die Auswerteeinheit, welche das Anwenderprogramm ausführt, eine Speicherschutzeinrichtung aufweist, welche dazu ausgebildet ist, einen Speicherzugriff des Anwenderprogramms auf einen definierten Speicherbereich innerhalb des Arbeitsspeichers zu beschränken.

Das Auswerteprogramm kann auch als Firmware bezeichnet werden. Das Auswerteprogramm zeichnet sich dadurch aus, dass dieses Programm ein geprüftes geschlossenes Programm ist, das beispielsweise den Sicherheitsstandards von Sicherheitsnormen, beispielsweise der EN61496 oder der EN61508 oder ähnlichen Sicherheitsnormen entspricht.

Das Anwenderprogramm kann auch als Applikationsprogramm, Anwenderprogramm oder auch als Benutzerprogramm bezeichnet werden. Das Anwenderprogramm steuert eine Anwendung insbesondere eine industrielle Anwendung, beispielsweise eine Vermessungsanlage, eine Sortieranlage, eine Förderanlage oder dergleichen. Das Anwenderprogramm zeichnet sich dadurch aus, dass es meist von einem Anwender des Sicherheitssensors und nicht von dessen Hersteller erstellt wird. Meist beinhaltet das Anwenderprogramm auch Anwendungsdaten die ebenso vom Anwender bereitgestellt werden. Bei den Anwendungsdaten handelt es sich beispielsweise um Produktionsdaten, Vermessungsdaten, Lagerdaten usw.

Gemäß der Erfindung wird das Anwenderprogramm direkt durch die jeweilige Auswerteeinheit des Sicherheitssensors ausgeführt. Das ist wesentlich einfacher und effizienter als die Lösungen im Stand der Technik, da beispielsweise ein Zählen von Strahlunterbrechungen direkt in der Auswerteeinheit durchgeführt werden kann und beispielsweise der Zählerstand mit weitaus geringerer Übertragungsrate über eine einfache Schnittstelle übertragen werden kann.

Die erfindungsgemäße Auswertung des Anwenderprogramms birgt darüber hinaus erhebliches Potential, anwenderspezifische Automatisierungslösungen zu realisieren, ohne Änderungen an dem Sicherheitssensor vornehmen zu müssen, wodurch der Sicherheitssensor vielseitiger einsetzbar ist.

Gemäß der Erfindung ist es vorgesehen, dass der Sicherheitssensor zusätzlich zu sicherheitsgerichteten Ausgängen, sogenannten ,Output Safety Switching Device Ausgängen, kurz OSSD-Ausgängen, weitere nicht sicherheitsgerichtete Ausgänge aufweist und auf diesen nicht sicherheitsgerichteten Ausgängen nicht sicherheitsgerichtete Zusatzinformationen zu Automatisierungszwecken ausgegeben werden.

Gemäß der Erfindung wird eine sogenannte Sandbox innerhalb des sicheren Auswerteprogramms der Auswerteeinheit generiert, in der ohne Beeinträchtigung der funktionalen Sicherheit des Sicherheitssensors ein nahezu beliebiges Anwenderprogramm bzw. nahezu beliebige Anwenderprogramme betrieben werden können. Das Anwenderprogramm hat ohne zusätzlichen Bedarf an teuren, hoch performanten Schnittstellen, wie diese beim Stand der Technik noch benötigt würden, einen direkten und schnellen Zugriff auf umfangreiche Betriebsdaten des Sicherheitssensors. Das Anwenderprogramm kann diese Betriebsdaten applikationsspezifisch auswerten und daraus errechnete Ergebnisdaten über eine niedrig performante, kostengünstige Schnittstelle beispielsweise an eine nachgeordnete Automatisierungs-Steuerung einer Anlage ausgeben.

Gemäß der Erfindung kann das Anwenderprogramm beispielsweise im Programmspeicher des anderen Kanals bzw. der zweiten Auswerteeinheit abgelegt sein und das Anwenderprogramm wird über den Kommunikationskanal in den Arbeitsspeicher der ersten Auswerteeinheit übertragen. Umgekehrt gilt dies natürlich ebenso.

Gemäß der Erfindung kann es optional vorgesehen sein, dass die Eingangsdaten und Ausgangsdaten des Anwenderprogramms per Direktzugriff erfolgt. Dabei kann ein bestimmter Speicherbereich für das Auswerteprogramm und für das Anwenderprogramm vorgesehen sein.

In Weiterbildung der Erfindung ist die erste Auswerteeinheit diversitär zur zweiten Auswerteeinheit ausgebildet. Die Auswerteeinheiten sind dabei unterschiedlich. Beispielsweise sind die Auswerteeinheiten durch Mikrocontroller, Mikroprozessoren, Digitale Signalprozessoren, FPGA, ASICs oder ähnliche Bausteine gebildet. Beispielsweise werden unterschiedliche Mikrocontroller als jeweils unterschiedliche Auswerteeinheit eingesetzt.

Durch den Einsatz von verschiedenen Auswerteeinheiten werden systematische Fehler vermieden, die möglicherweise bei der Hardware einer Auswerteeinheit vorhanden sind. Sind beispielsweise einzelne Speicherzellen defekt, so ist die Wahrscheinlichkeit eines identischen Defekts bei einer unterschiedlich ausgebildeten zweiten Auswerteeinheit sehr gering.

Durch diversitäre Auswerteeinheiten kann die Sicherheit des Sicherheitssensors gegenüber einer redundanten Ausbildung weiter erhöht werden.

In Weiterbildung der Erfindung ist das erste Auswerteprogramm diversitär zum zweiten Auswerteprogramm. Die Auswerteprogramme basieren dabei auf unterschiedlichen Quellcodes. Der Quellcode kann dabei in einer identischen Programmiersprache erstellt worden sein, jedoch ist das Programmdesign zwischen den Auswerteprogrammen unterschiedlich. Diversitäre Auswerteprogramme könne jedoch auch in unterschiedlichen Programmiersprachen erstellt werden. Diversitäre Auswerteprogramme können beispielsweise von unterschiedlichen Entwicklern bzw. Informatikern erstellt worden sein.

Durch den Einsatz von verschiedenen Auswerteprogrammen werden systematische Fehler vermieden, die möglicherweise bei der Programmierung der Software entstanden sind. Sind beispielsweise einzelne Funktionen fehlerhaft, so ist die Wahrscheinlichkeit eines identischen Funktionsfehlers bei einem unterschiedlich ausgebildeten zweiten Auswerteprogramm sehr gering.

Durch diversitäre Auswerteprogramme kann die Sicherheit des Sicherheitssensors gegenüber einer redundanten Ausbildung der Auswerteprogramme weiter erhöht werden.

In Weiterbildung der Erfindung ist vorgesehen, dass wenn durch das Anwenderprogramm ein Zugriffsversuch auf Speicherbereiche außerhalb des erlaubten Speicherbereichs erfolgt, von der Auswerteeinheit, welche das Auswerteprogramm ausführt, ein übergeordnetes Speicherschutzverletzungsprogramm aufrufbar ist und der Zugriff auf den Speicherbereich verweigerbar ist.

Dadurch werden die Zugriffe bzw. Zugriffsversuche des Anwenderprogramms durch das Auswerteprogramm überprüft und bei einem nicht zulässigen Zugriff das Speicherschutzverletzungsprogramm aufgerufen. Das Speicherschutzverletzungsprogramm sorgt dafür, dass die Speicherbereiche nicht durch das Anwenderprogramm überschrieben werden können und gibt ggf. eine Fehlermeldung aus.

Gemäß einer bevorzugten Ausführungsform der Erfindung ist der Sicherheitssensor ein Sicherheitslichtgitter. Ein Sicherheitslichtgitter dient der Absicherung eines Gefahrenbereichs mittels eines Überwachungsfeldes. Erfolgt beispielsweise ein Eingriff in das Überwachungsfeld wird eine gefahrbringende Bewegung gestoppt.

Das Lichtgitter besteht beispielsweise aus einer Sendeeinheit mit einer Vielzahl von Lichtsendern und einer Empfangseinheit mit einer Vielzahl von Lichtempfängern und der ersten und zweiten Auswerteeinheit. Zwischen der Sendeeinheit und der Empfangseinheit wird das Überwachungsfeld bzw. ein Schutzfeld gebildet, wobei die Lichtstrahlen der Lichtsender der Sendeeinheit auf gegenüberliegende Lichtempfänger der Empfangseinheit treffen, wodurch einzelne Lichtschranken gebildet werden.

Da das Sicherheitslichtgitter eine Vielzahl von nebeneinander angeordneten Strahlachsen aufweist, können damit auch Objekte klassifiziert und vermessen werden. Beispielsweise können zulässige Objekte, die durch das Schutzfeld hindurchbewegt werden, durch die Vielzahl der Lichtschranken abgetastet werden und damit eine Objektklassifikation durchgeführt werden. Beispielsweise können abhängig von den detektierten Objekten unterschiedliche Verfahrensschritte veranlasst werden. Diese nicht sichere Objektklassifikation kann beispielsweise durch das Anwenderprogramm in einer der Auswerteeinheiten des Sicherheitslichtgitters bzw. des Lichtgitters durchgeführt werden. Dadurch kann durch nur ein einziges Sicherheitslichtgitter bzw. Lichtgitter eine Sicherheitsanwendung und eine Automatisierungsanwendung gelöst werden.

In Weiterbildung der Erfindung ist dem Anwenderprogramm im Arbeitsspeicher der zugehörigen Auswerteeinheit ein Teil des Arbeitsspeichers für die Nutzung durch das Auswerteprogramm zuweisbar, wobei die Speicherschutzeinrichtung dazu ausgebildet ist, einen Zugriff des Anwenderprogramms nur auf diesen Teil des Arbeitsspeichers zu beschränken.

Dadurch können die Zugriffe des Anwenderprogramms auf den Arbeitsspeicher durch die Auswerteeinheit bzw. durch das Auswerteprogramm überprüft werden. Die Speicherschutzeinrichtung beschränkt den Zugriff, um unerlaubte Zugriffe zu verhindern um den Schutz des Auswerteprogramms zu gewährleisten.

In Weiterbildung der Erfindung ist die Speicherschutzeinrichtung zyklisch überprüfbar. Durch die zyklische Prüfung der Speicherschutzreinrichtung wird deren ordnungsgemäße Funktion gewährleistet, wodurch die Sicherheit des Auswerteprogrammes verbessert wird.

In Weiterbildung der Erfindung ist das Anwenderprogramm von dem Auswerteprogramm der Auswerteeinheit zyklisch ausführbar, wobei das Auswerteprogramm eine höhere Priorität aufweist, als das Anwenderprogramm. Dadurch hat das Auswerteprogramm die vollständige Kontrolle über das Anwenderprogramm. Das Anwenderprogramm kann nur ausgeführt werden, wenn das Auswerteprogramm dies zulässt und das Anwenderprogramm aktiv aufruft. Das Auswerteprogramm wird auch immer mit einer höheren Priorität ausgeführt als das Anwenderprogramm. Beispielsweise ist das Auswerteprogramm mit einer höheren Interrupt-Priorität oder einer Verwendung von Hardware-Timern realisiert, so dass das Auswerteprogramm immer mit höherer Priorität als das Anwenderprogramm ausgeführt wird und das Anwenderprogramm nach einer Höchstausführungsdauer immer unterbrechen kann.

Gemäß einer bevorzugten Ausführung der Erfindung weist das Auswerteprogramm eine Software-Abstraktionsschicht auf, welche eine Auswahl von Betriebsdaten des Sicherheitssensors in einem für das Anwenderprogramm lesbaren Speicherbereich zur Verfügung stellt. Beispielsweise können die Strahldaten des Lichtgitters oder die Scandaten eines Laserscanners in diesem Speicherbereich zur Verfügung gestellt werden.

Gemäß einer Weiterbildung der Erfindung sind sichere und/oder nicht sichere Daten und/oder Signale von einer Anlage über Eingänge des Sicherheitssensors in die Auswerteeinheit des Sicherheitssensor einlesbar. Dabei handelt es sich beispielsweise um Muting-Signale für eine Muting-Anwendung oder um Ausgabesignale der Anlage für eine Vermessung von Objekten. Weiter kann es sich auch beispielsweise um ein Bandgeschwindigkeitssignal bzw. Bandencoder-Signale handeln. Insbesondere bei komplexen Anwendungen ist das Einlesen solcher Daten sinnvoll, da der Sicherheitssensor Zusatzinformation verarbeiten kann, um beispielsweise komplexere Anwendungen zu lösen.

Diese Daten und/oder Signale sind in Weiterbildung der Erfindung dem Anwenderprogramm über die Softwareabstraktionsschicht zugänglich. So ist es beispielsweise möglich, mittels eines an den Sicherheitssensor, insbesondere an das Sicherheitslichtgitter weitergegebenen Bandgeschwindigkeits- bzw. Bandpositionssignals mit dem Sicherheitssensor bzw. Sicherheitslichtgitter ein 2D-Bild von Objekten zur Klassifizierung zu erstellen, wenn die Objekte am Sicherheitssensor bzw. am Sicherheitslichtgitter vorbeibewegt werden.

Gemäß einer weiter bevorzugten Ausführung der Erfindung weist das Auswerteprogramm eine Software-Abstraktionsschicht auf, welche Ergebnisdaten des Anwenderprogramms aus einem für das Anwenderprogramm schreibbaren Speicherbereich entgegennimmt und auf eine Schnittstelle ausgibt und/oder die Ergebnisdaten für eine externe Steuerung abrufbar bereithält. Dadurch können nachfolgende Steuerungen oder direkt Aktoren basierend auf den Ergebnissen des Anwenderprogramms angesteuert werden.

In Weiterbildung der Erfindung ist in beiden Programmspeichern bzw. in beiden Arbeitsspeichern das Anwenderprogramm speicherbar, wobei beide Auswerteeinheiten ausgebildet sind, das Anwenderprogramm auszuführen, wobei Ergebnisse des Anwenderprogramms zwischen den Auswerteeinheiten über den Kommunikationskanal austauschbar sind.

Gemäß dieser Weiterbildung der Erfindung ist das Anwenderprogramm als sicherheitsgerichtetes, applikationsspezifisches Programm ausgebildet. Dadurch kann ein sicheres Anwenderprogramm im Sicherheitssensor ausgeführt werden.

Hierzu weist jede Auswerteeinheit eine Speicherschutzeinrichtung auf, welche einen Speicherzugriff des Anwenderprogramms auf einen definierten Speicherbereich innerhalb des Arbeitsspeichers beschränkt.

Das Anwenderprogramm wird dann auf beiden Auswerteeinheiten parallel verarbeitet bzw. ausgeführt. Die Ergebnisse des Anwenderprogramms werden über die Auswerteprogramme der beiden Auswerteeinheiten über den Kommunikationskanal verglichen und ausgewertet. Abweichungen werden als Fehlerzustand aufgedeckt.

Darüber hinaus wird durch das Auswerteprogramm die Integrität des Anwenderprogramms sichergestellt. Beispielsweise durch die doppelte Ablage in beiden Programmspeichern und zyklischem Quervergleich zwischen den Anwenderprogrammen bei deren Ausführung. Weiter könnten die Anwenderprogramme über Checksummen und entsprechende Prüfungen überprüft werden.

Gemäß dieser Weiterbildung der Erfindung können die zweikanalig berechneten Ergebnisse des Anwenderprogramms über eine Sicherheitsschnittstelle ausgegeben werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sicherheitsensor mit zwei Auswerteeinheiten;
- Figur 2: ein Sicherheitslichtgitter;
- Figur 3: einen Sicherheitsensor mit einer Sandbox;
- Figur 4 und 5: jeweils einen Sicherheitsensor mit zwei Auswerteeinheiten.

In den nachfolgenden Figuren sind identische Teile mit identischen Bezugszeichen versehen.

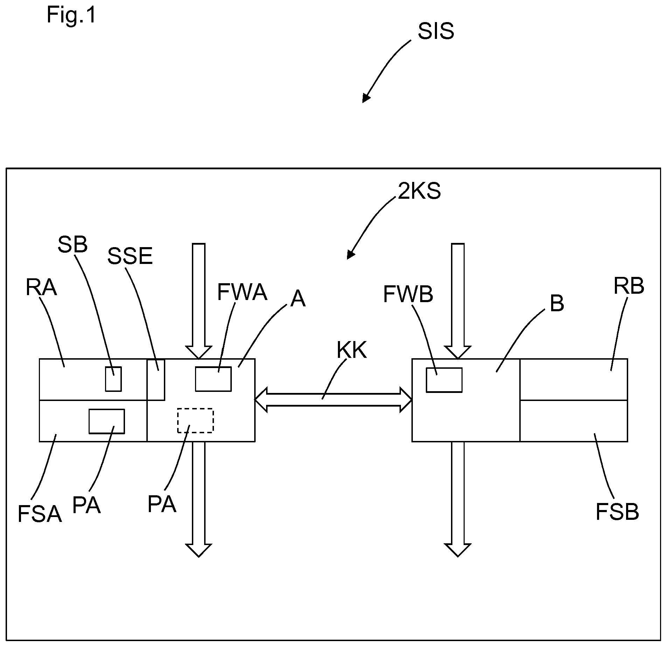

Figur 1 zeigt einen Sicherheitssensor SIS, mit mindestens einer ersten Auswerteeinheit A mit einem ersten Auswerteprogramm FWA und mindestens einer zweiten Auswerteeinheit B mit einem zweiten Auswerteprogramm FWB, wodurch ein zweikanaliges System 2KS gebildet wird, wobei jede Auswerteeinheit A, B jeweils mit einem Arbeitsspeicher RA, RB verbunden ist und jede Auswerteeinheit A, B jeweils einen Programmspeicher FSA, FSB aufweist, wobei zwischen den Auswerteeinheiten A, B ein bidirektionaler Kommunikationskanal KK angeordnet ist, wodurch ein Quervergleich der Auswerteergebnisse zwischen den Auswerteeinheiten A, B durchführbar ist, wobei in mindestens einem der beiden Programmspeicher FSA, FSB und/oder in einem der beiden Arbeitsspeicher RA, RB ein Anwenderprogramm PA ablegbar ist, wobei mindestens die Auswerteeinheit A, B, welche das Anwenderprogramm PA ausführt, eine Speicherschutzeinrichtung SSE aufweist, welche dazu ausgebildet ist, einen Speicherzugriff des Anwenderprogramms PA, PB auf einen definierten Speicherbereich SB innerhalb des Arbeitsspeichers RA, RB zu beschränken.

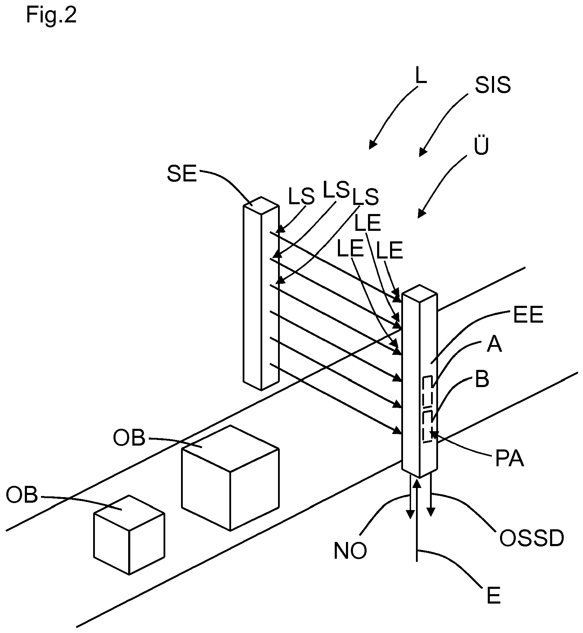

Gemäß Figur 2 ist der Sicherheitssensor SIS ein Sicherheitslichtgitter L. Ein Sicherheitslichtgitter L dient der Absicherung eines Gefahrenbereichs mittels eines Überwachungsfeldes Ü. Erfolgt beispielsweise ein Eingriff in das Überwachungsfeld Ü wird eine gefahrbringende Bewegung gestoppt.

Das Lichtgitter L besteht beispielsweise aus einer Sendeeinheit SE mit einer Vielzahl von Lichtsendern LS und einer Empfangseinheit EE mit einer Vielzahl von Lichtempfängern LE und der ersten Auswerteeinheit A und zweiten Auswerteeinheit B. Zwischen der Sendeeinheit SE und der Empfangseinheit EE wird das Überwachungsfeld Ü bzw. ein Schutzfeld gebildet, wobei die Lichtstrahlen der Lichtsender LS der Sendeeinheit SE auf gegenüberliegende Lichtempfänger LE der Empfangseinheit EE treffen, wodurch einzelne Lichtschranken gebildet werden.

Da das Sicherheitslichtgitter L eine Vielzahl von nebeneinander angeordneten Strahlachsen aufweist, können damit auch Objekte OB klassifiziert und vermessen werden. Beispielsweise können zulässige Objekte OB, die durch das Schutzfeld hindurchbewegt werden, durch die Vielzahl der Lichtschranken abgetastet werden und damit eine Objektklassifikation durchgeführt werden. Beispielsweise können abhängig von den detektierten Objekten OB unterschiedliche Verfahrensschritte veranlasst werden. Diese nicht sichere Objektklassifikation kann beispielsweise durch das Anwenderprogramm PA in einer der Auswerteeinheiten A, B des Sicherheitslichtgitters bzw. des Lichtgitters L durchgeführt werden. Dadurch kann durch nur ein einziges Sicherheitslichtgitter bzw. Lichtgitter L eine Sicherheitsanwendung und eine Automatisierungsanwendung gelöst werden.

Das Anwenderprogramm PA steuert eine Anwendung, insbesondere eine industrielle Anwendung, beispielsweise eine Vermessungsanlage, eine Sortieranlage oder beispielsweise eine Förderanlage gemäß Figur 2.

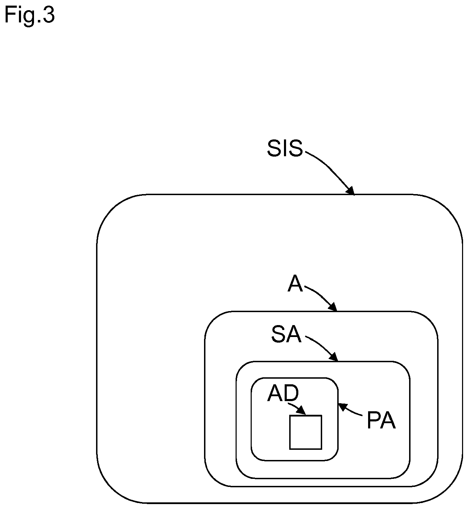

Gemäß Figur 3 beinhaltet das Anwenderprogramm PA auch Anwendungsdaten AD, die ebenso vom Anwender bereitgestellt werden. Bei den Anwendungsdaten AD handelt es sich beispielsweise um Produktionsdaten, Vermessungsdaten, Lagerdaten usw.

Gemäß Figur 1 und Figur 2 wird das Anwenderprogramm PA direkt durch die jeweilige Auswerteeinheit A des Sicherheitssensors SIS ausgeführt.

Gemäß Figur 2 ist es vorgesehen, dass der Sicherheitssensor zusätzlich zu sicherheitsgerichteten Ausgängen OSSD, sogenannten ,Output Safety Switching Device Ausgängen, kurz OSSD-Ausgänge, weitere nicht sicherheitsgerichtete Ausgänge NO aufweist und auf diesen nicht sicherheitsgerichteten Ausgängen NO nicht sicherheitsgerichtete Zusatzinformationen zu Automatisierungszwecken ausgegeben werden. Weiter sind Eingänge E vorhanden, um Daten und/oder Signale einer Anlage bzw. einer Steuerung einzulesen.

Gemäß Figur 3 wird eine sogenannte Sandbox SA innerhalb des sicheren Auswerteprogramms der Auswerteeinheit A generiert, in der ohne Beeinträchtigung der funktionalen Sicherheit des Sicherheitssensors SIS ein nahezu beliebiges Anwenderprogramm PA bzw. nahezu beliebige Anwenderprogramme betrieben werden können.

Das Anwenderprogramm PA kann Betriebsdaten applikationsspezifisch auswerten und daraus errechnete Ergebnisdaten über eine niedrig performante, kostengünstige Schnittstelle, beispielsweise an eine nachgeordnete Automatisierungs-Steuerung einer Anlage ausgeben.

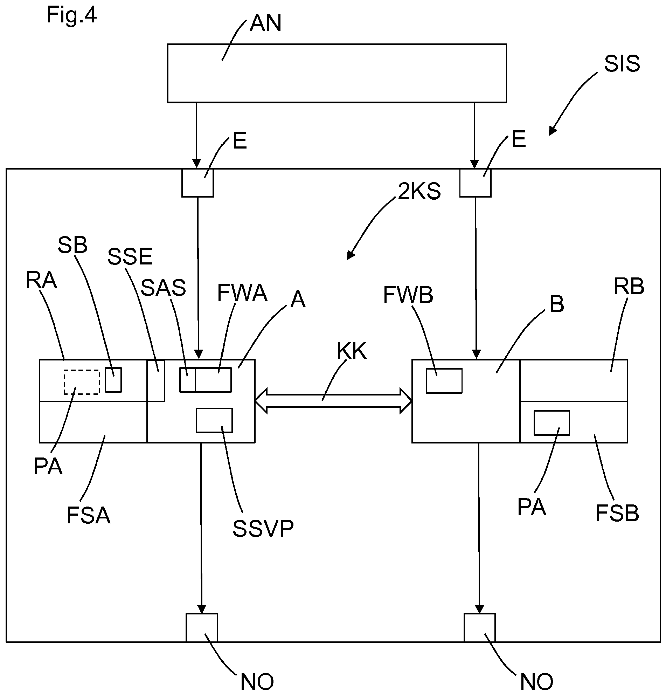

Gemäß Figur 4 kann das Anwenderprogramm PA beispielsweise im Programmspeicher FSB des anderen Kanals bzw. der zweiten Auswerteeinheit B abgelegt sein und das Anwenderprogramm PA wird über den Kommunikationskanal KK in den Arbeitsspeicher RA der ersten Auswerteeinheit A übertragen. Umgekehrt gilt dies natürlich ebenso.

Gemäß Figur 4 kann es optional vorgesehen sein, dass die Eingangsdaten und Ausgangsdaten des Anwenderprogramms PA per Direktzugriff erfolgt. Dabei kann ein bestimmter Speicherbereich SB für das Auswerteprogramm FWA und für das Anwenderprogramm PA vorgesehen sein.

Optional ist die erste Auswerteeinheit A diversitär zur zweiten Auswerteeinheit B ausgebildet. Beispielsweise sind die Auswerteeinheiten A, B durch Mikrocontroller, Mikroprozessoren, Digitale Signalprozessoren, FPGAs, ASICs oder ähnliche Bausteine gebildet.

Optional ist das erste Auswerteprogramm FWA diversitär zum zweiten Auswerteprogramm FWB.

Weiter ist es gemäß Figur 4 vorgesehen, dass wenn durch das Anwenderprogramm PA ein Zugriffsversuch auf Speicherbereiche außerhalb des erlaubten Speicherbereichs erfolgt, von der Auswerteeinheit A, welche das Auswerteprogramm FWA ausführt, ein übergeordnetes Speicherschutzverletzungsprogramm SSVP aufrufbar ist und der Zugriff auf den Speicherbereich verweigerbar ist.

Weiter ist dem Anwenderprogramm PA im Arbeitsspeicher RA der zugehörigen Auswerteeinheit A ein Teil des Arbeitsspeichers RA für die Nutzung durch das Auswerteprogramm FWA zuweisbar, wobei die Speicherschutzeinrichtung SSE dazu ausgebildet ist, einen Zugriff des Anwenderprogramms PA nur auf diesen Teil des Arbeitsspeichers RA zu beschränken. Die Speicherschutzeinrichtung SSE ist zyklisch überprüfbar.

Das Anwenderprogramm PA ist von dem Auswerteprogramm FWA der Auswerteeinheit A zyklisch ausführbar, wobei das Auswerteprogramm FWA eine höhere Priorität aufweist, als das Anwenderprogramm PA. Dadurch hat das Auswerteprogramm FWA die vollständige Kontrolle über das Anwenderprogramm PA.

Gemäß Figur 4 weist das Auswerteprogramm FWA eine Software-Abstraktionsschicht SAS auf, welche eine Auswahl von Betriebsdaten des Sicherheitssensors SIS in einem für das Anwenderprogramm PA lesbaren Speicherbereich zur Verfügung stellt. Beispielsweise können die Strahldaten des Lichtgitters L in diesem Speicherbereich zur Verfügung gestellt werden.

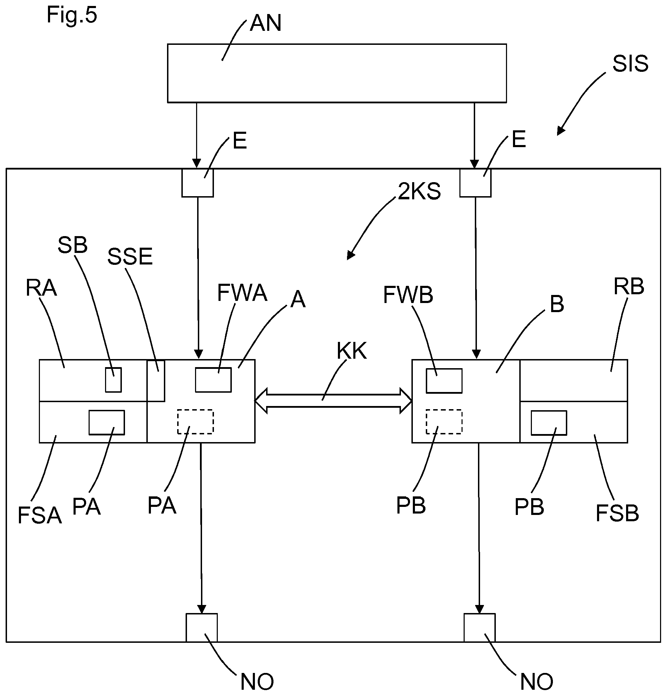

Gemäß Figur 4 und Figur 5 sind sichere und/oder nicht sichere Daten und/oder Signale von einer Anlage AN über Eingänge E des Sicherheitssensors SIS in die Auswerteeinheit A, B des Sicherheitssensors SIS einlesbar. Dabei handelt es sich beispielsweise um Muting-Signale für eine Muting-Anwendung oder um Ausgabesignale einer Anlage für eine Vermessung von Objekten OB. Weiter kann es sich auch beispielsweise um ein Bandgeschwindigkeits- bzw. Bandencoder-Signale gemäß einer Anwendung aus Figur 2 handeln.

Diese Daten und/oder Signale sind dem Anwenderprogramm PA, PB über die Softwareabstraktionsschicht SAS zugänglich. So ist es beispielsweise möglich, mittels eines an den Sicherheitssensor SIS insbesondere an das Sicherheitslichtgitter L weitergegebenen Bandgeschwindigkeits- bzw. Bandpositionssignals gemäß der Anwendung aus Figur 2 mit dem Sicherheitssensor SIS bzw. Sicherheitslichtgitter ein 2D-Bild von Objekten OB zur Klassifizierung zu erstellen, wenn die Objekte OB am Sicherheitssensor SIS bzw. am Sicherheitslichtgitter vorbeibewegt werden.

Optional weist das Auswerteprogramm FWA eine Software-Abstraktionsschicht SAS auf, welche Ergebnisdaten des Anwenderprogramms PA aus einem für das Anwenderprogramm PA schreibbaren Speicherbereich entgegennimmt und auf eine Schnittstelle ausgibt und/oder die Ergebnisdaten für eine externe Steuerung abrufbar bereithält. Dadurch können nachfolgende Steuerungen oder direkt Aktoren basierend auf den Ergebnissen des Anwenderprogramms PA angesteuert werden.

Gemäß Figur 5 ist in beiden Programmspeichern FSA, FSB bzw. in beiden Arbeitsspeichern RA, RB das Anwenderprogramm PA bzw. PB speicherbar, wobei beide Auswerteeinheiten A bzw. B ausgebildet sind, das Anwenderprogramm PA, PB auszuführen, wobei Ergebnisse der Anwenderprogramme PA, PB zwischen den Auswerteeinheiten A, B über den Kommunikationskanal KK austauschbar sind.

Gemäß Figur 5 ist das Anwenderprogramm PA, PB als sicherheitsgerichtetes, applikationsspezifisches Programm ausgebildet. Dadurch kann ein sicheres Anwenderprogramm PA, PB im Sicherheitssensor SIS ausgeführt werden.

Das Anwenderprogramm PA, PB wird dann auf beiden Auswerteeinheiten parallel verarbeitet bzw. ausgeführt. Die Ergebnisse des Anwenderprogramms PA, PB werden über die Auswerteprogramme FWA, FWB der beiden Auswerteeinheiten A, B über den Kommunikationskanal KK verglichen und ausgewertet.

Gemäß Figur 4 und Figur 5 können die zweikanalig berechneten Ergebnisse des Anwenderprogramms PA, PB bzw. des Auswerteprogramms FWA, FWB über eine Schnittstelle, eine Sicherheitsschnittstelle und/oder Ausgänge NO ausgegeben werden.

Bezugszeichen:
SIS Sicherheitssensor
A erste Auswerteeinheit
FWA erstes Auswerteprogramm
B zweite Auswerteeinheit
FWB zweites Auswerteprogramm
2KS zweikanaliges System
RA, RB Arbeitsspeicher
FSA, FSB Programmspeicher
KK Kommunikationskanal
PA, PB Anwenderprogramm
SSE Speicherschutzeinrichtung
SB Speicherbereich
SSVP Speicherschutzverletzungsprogramm
SAS Softwareabstraktionsschicht
L Lichtgitter
SE Sendeeinheit
EE Empfangseinheit
LS Lichtsender
LE Lichtempfänger
Ü Überwachungsfeld
SA Sandbox
OB Objekt
E Eingänge
NO Ausgänge
AN Anlage
OSSD sicherheitsgerichtete Ausgänge

## Patentansprüche

1. Sicherheitssensor, mit mindestens einer ersten Auswerteeinheit (A) mit einem ersten Auswerteprogramm (FWA) und mindestens einer zweiten Auswerteeinheit (B) mit einem zweiten Auswerteprogramm (FWB), wodurch ein zweikanaliges System (2KS) gebildet wird, wobei die Auswerteprogramme nach Sicherheitsstandards von Sicherheitsnormen geprüfte geschlossene Programme sind, wobei jede Auswerteeinheit (A, B) jeweils mit einem Arbeitsspeicher (RA, RB) verbunden ist und jede Auswerteeinheit (A, B) jeweils einen Programmspeicher (FSA, FSB) aufweist, wobei zwischen den Auswerteeinheiten (A, B) ein bidirektionaler Kommunikationskanal (KK) angeordnet ist, wodurch ein Quervergleich der Auswerteergebnisse zwischen den Auswerteeinheiten (A, B) durchführbar ist,
**dadurch gekennzeichnet, dass**
in mindestens einem der beiden Programmspeicher (FSA, FSB) und/oder in einem der beiden Arbeitsspeicher (RA, RB) ein Anwenderprogramm (PA, PB) ablegbar ist, wobei das Anwenderprogramm eine industrielle Anwendung steuert, wobei
mindestens die Auswerteeinheit (A, B), welche das Anwenderprogramm (PA, PB) ausführt, eine Speicherschutzeinrichtung (SSE) aufweist, welche dazu ausgebildet ist, einen Speicherzugriff des Anwenderprogramms (PA, PB) auf einen definierten Speicherbereich (SB) innerhalb des Arbeitsspeichers (RA, RB) zu beschränken.

2. Sicherheitssensor nach Anspruch 1, **dadurch gekennzeichnet, dass** wenn durch das Anwenderprogramm (PA, PB) ein Zugriffsversuch auf Speicherbereiche (SB) außerhalb des erlaubten Speicherbereichs (SB) erfolgt, von der Auswerteeinheit (A, B), welche das Auswerteprogramm (FWA, FWB) ausführt, ein übergeordnetes Speicherschutzverletzungsprogramm (SSVP) aufrufbar ist und der Zugriff auf den Speicherbereich (SB) verweigerbar ist.

3. Sicherheitssensor nach mindestens einem der vorhergehenden Ansprüche, **dadurch gekennzeichnet, dass** dem Anwenderprogramm (PA, PB) im Arbeitsspeicher (RA, RB) der zugehörigen Auswerteeinheit (A, B) ein Teil des Arbeitsspeichers (RA,RB) für die Nutzung durch das Auswerteprogramm (FWA, FWB) zuweisbar ist, wobei die Speicherschutzeinrichtung (SSE) dazu ausgebildet ist, einen Zugriff des Anwenderprogramms (PA, PB) nur auf diesen Teil des Arbeitsspeichers (RA, RB) zu beschränken, wodurch Zugriffe des Anwenderprogramms auf den Arbeitsspeicher durch die Auswerteeinheit oder durch das Auswerteprogramm überprüft werden.

4. Sicherheitssensor nach mindestens einem der vorhergehenden Ansprüche, **dadurch gekennzeichnet, dass** das Anwenderprogramm (PA, PB) von dem Auswerteprogramm (FWA, FWB) der Auswerteeinheit (A, B) zyklisch ausführbar ist, wobei das Auswerteprogramm (FWA, FWB) eine höhere Priorität aufweist, als das Anwenderprogramm (PA, PB).

5. Sicherheitssensor nach mindestens einem der vorhergehenden Ansprüche, **dadurch gekennzeichnet, dass** das Auswerteprogramm (FWA, FWB) eine Softwareabstraktionsschicht (SAS) aufweist, welche eine Auswahl von Betriebsdaten des Sicherheitssensors (SIS) in einem für das Anwenderprogramm (PA, PB) lesbaren Speicherbereich (SB) zur Verfügung stellt.

6. Sicherheitssensor nach mindestens einem der vorhergehenden Ansprüche, **dadurch gekennzeichnet, dass** sicherheitsgerichtete und/oder nicht sicherheitsgerichtete Daten und/oder Signale von einer Anlage (AN) über Eingänge (E) des Sicherheitssensors (SIS) in die Auswerteeinheit (A, B) des Sicherheitssensor einlesbar sind.

7. Sicherheitssensor nach mindestens einem der vorhergehenden Ansprüche 5 bis 6, **dadurch gekennzeichnet, dass** die Daten und/oder Signale dem Anwenderprogramm (FWA, FWB) über die Softwareabstraktionsschicht (SAS) zugänglich sind.

8. Sicherheitssensor nach mindestens einem der vorhergehenden Ansprüche, **dadurch gekennzeichnet, dass** das Auswerteprogramm (FWA, FWB) eine Softwareabstraktionsschicht (SAS) aufweist, welche Ergebnisdaten des Anwenderprogramms (PA, PB) aus einem für das Anwenderprogramm (PA, PB) schreibbaren Speicherbereich (SB) entgegennimmt und auf eine Schnittstelle ausgibt und/oder die Ergebnisdaten für eine externe Steuerung abrufbar bereithält.

9. Sicherheitssensor nach mindestens einem der vorhergehenden Ansprüche, **dadurch gekennzeichnet, dass** in beiden Programmspeichern (FSA, FSB) bzw. in beiden Arbeitsspeichern (RA, RB) das Anwenderprogramm (PA, PB) speicherbar ist, wobei
beide Auswerteeinheiten (A, B) ausgebildet sind das Anwenderprogramm (PA, PB) auszuführen, wobei Ergebnisse des Anwenderprogramms (PA, PB) zwischen den Auswerteeinheiten (A, B) über den Kommunikationskanal (KK) austauschbar sind.

## Claims

1. A safety sensor comprising at least one first evaluation unit (A) having a first evaluation program (FWA) and comprising at least one second evaluation unit (B) having a second evaluation program (FWB), whereby a two-channel system (2KS) is formed, wherein the evaluation programs are closed programs tested in accordance with safety regulations of safety standards, with each evaluation unit (A, B) being connected to a respective random access memory (RA, RB) and with each evaluation unit (A, B) having a respective program memory (FSA, FSB), with a bidirectional communication channel (KK) being arranged between the evaluation units (A, B), whereby a cross-comparison of the evaluation results between the evaluation units (A, B) can be carried out,
**characterized in that**
a user program (PA, PB) can be stored in at least one of the two program memories (FSA, FSB) and/or in one of the two random access memories (RA, RB), with the user program controlling an industrial application, with
at least that evaluation unit (A, B) which executes the user program (PA, PB) having a memory protection device (SSE) which is configured to restrict memory access of the user program (PA, PB) to a defined memory region (SB) within the random access memory (RA, RB).

2. A safety sensor in accordance with claim 1, **characterized in that** if an access attempt by the user program (PA, PB) takes place to memory regions (SB) outside the allowed memory region (SB), a higher-ranking memory protection violation program (SWP) is invokable by the evaluation unit (A, B) which executes the evaluation program (FWA, FWB) and the access to the memory region (SB) can be refused.

3. A safety sensor in accordance with at least one of the preceding claims, **characterized in that** a part of the random access memory (RA, RB) can be assigned to the user program (PA, PB) in the random access memory (RA, RB) of the associated evaluation unit (A, B) for use by the evaluation program (FWA, FWB), with the memory protection device (SSE) being configured to restrict access of the user program (PA, PB) only to this part of the random access memory (RA, RB), whereby access procedures of the user program to the random access memory are checked by the evaluation unit or by the evaluation program.

4. A safety sensor in accordance with at least one of the preceding claims, **characterized in that** the user program (PA, PB) can be executed cyclically by the evaluation program (FWA, FWB) of the evaluation unit (A, B), with the evaluation program (FWA, FWB) having a higher priority than the user program (PA, PB).

5. A safety sensor in accordance with at least one of the preceding claims, **characterized in that** the evaluation program (FWA, FWB) has a software abstraction layer (SAS) which provides a selection of operating data of the safety sensor (SIS) in a memory region (SB) readable for the user program (PA, PB).

6. A safety sensor in accordance with at least one of the preceding claims, **characterized in that** safety related and/or non-safety related data and/or signals from a system (AN) can be read into the evaluation unit (A, B) of the safety sensor via inputs (E) of the safety sensor (SIS).

7. A safety sensor in accordance with at least one of the preceding claims 5 to 6, **characterized in that** the data and/or signals are accessible to the user program (PA, PB) via the software abstraction layer (SAS).

8. A safety sensor in accordance with at least one of the preceding claims, **characterized in that** the evaluation program (FWA, FWB) has a software abstraction layer (SAS) which accepts results data of the user program (PA, PB) from a memory region (SB) writable for the user program (PA, PB) and outputs them to an interface and/or keeps the results data ready for invoking for an external control.

9. A safety sensor in accordance with at least one of the preceding claims, **characterized in that** the user program (PA, PB) can be stored in both program memories (FSA, FSB) or in both random access memories (RA, RB), with
both evaluation units (A, B) being configured to execute the user program (PA, PB), with results of the user program (PA, PB) being exchangeable between the evaluation units (A, B) over the communication channel (KK).

## Revendications

1. Capteur de sécurité comportant au moins une première unité d'évaluation (A) pourvue d'un premier programme d'évaluation (FWA) et au moins une seconde unité d'évaluation (B) pourvue d'un second programme d'évaluation (FWB), moyennant quoi un système à deux canaux (2KS) est formé, les programmes d'évaluation étant des programmes fermés vérifiés selon des standards de sécurité de normes de sécurité, chaque unité d'évaluation (A, B) étant connectée à une mémoire de travail respective (RA, RB) et chaque unité d'évaluation (A, B) présentant une mémoire de programme respective (FSA, FSB), un canal de communication bidirectionnel (KK) étant agencé entre les unités d'évaluation (A, B), moyennant quoi une comparaison croisée des résultats d'évaluation entre les unités d'évaluation (A, B) peut s'effectuer,
**caractérisé en ce que**
un programme d'application (PA, PB) peut être stocké dans l'une au moins des deux mémoires de programme (FSA, FSB) et/ou dans l'une des deux mémoires de travail (RA, RB), le programme d'application commandant une application industrielle, et
au moins l'unité d'évaluation (A, B) qui exécute le programme d'application (PA, PB) présente un moyen de protection de mémoire (SSE) qui est réalisé pour restreindre un accès mémoire du programme d'application (PA, PB) à une zone de mémoire définie (SB) à l'intérieur de la mémoire de travail (RA, RB).

2. Capteur de sécurité selon la revendication 1, **caractérisé en ce que** lorsqu'une tentative d'accès à des zones de mémoire (SB) hors de la zone de mémoire (SB) permise s'effectue par le programme d'application (PA, PB), un programme de violation de protection de mémoire (SSVP) de niveau supérieur peut être appelé par l'unité d'évaluation (A, B) qui exécute le programme d'évaluation (FWA, FWB), et l'accès à la zone de mémoire (SB) est refusable.

3. Capteur de sécurité selon l'une au moins des revendications précédentes, **caractérisé en ce qu'**une partie de la mémoire de travail (RA, RB) pour l'utilisation par le programme d'évaluation (FWA, FWB) peut être attribuée au programme d'application (PA, PB) dans la mémoire de travail (RA, RB) de l'unité d'évaluation associée (A, B), le moyen de protection de mémoire (SSE) étant réalisé pour restreindre un accès du programme d'application (PA, PB) uniquement à cette partie de la mémoire de travail (RA, RB), moyennant quoi des accès du programme d'application à la mémoire de travail sont vérifiés par l'unité d'évaluation ou par le programme d'évaluation.

4. Capteur de sécurité selon l'une au moins des revendications précédentes, **caractérisé en ce que** le programme d'application (PA, PB) est exécutable cycliquement par le programme d'évaluation (FWA, FWB) de l'unité d'évaluation (A, B), le programme d'évaluation (FWA, FWB) présentant une priorité supérieure à celle du programme d'application (PA, PB).

5. Capteur de sécurité selon l'une au moins des revendications précédentes, **caractérisé en ce que** le programme d'évaluation (FWA, FWB) présente une couche d'abstraction de logiciel (SAS) qui met à disposition une sélection de données de fonctionnement du capteur de sécurité (SIS) dans une zone de mémoire (SB) qui est lisible par le programme d'application (PA, PB).

6. Capteur de sécurité selon l'une au moins des revendications précédentes, **caractérisé en ce que** des données et/ou des signaux sécurisés et/ou non sécurisés peuvent être entrés dans l'unité d'évaluation (A, B) du capteur de sécurité par une installation (AN) via des entrées (E) du capteur de sécurité (SIS).

7. Capteur de sécurité selon l'une au moins des revendications précédentes 5 à 6, **caractérisé en ce que** les données et/ou les signaux sont accessibles au programme d'application (FWA, FWB) via la couche d'abstraction de logiciel (SAS).

8. Capteur de sécurité selon l'une au moins des revendications précédentes, **caractérisé en ce que** le programme d'évaluation (FWA, FWB) présente une couche d'abstraction de logiciel (SAS) qui reçoit des données de résultat du programme d'application (PA, PB) depuis une zone de mémoire (SB) inscriptible pour le programme d'application (PA, PB) et qui les émet à une interface, et/ou maintient disponibles les données de résultat à appeler par une commande externe.

9. Capteur de sécurité selon l'une au moins des revendications précédentes, **caractérisé en ce que** le programme d'application (PA, PB) est mémorisable dans les deux mémoires de programme (FSA, FSB) ou dans les deux mémoires de travail (RA, RB),
les deux unités d'évaluation (A, B) étant réalisées pour exécuter le programme d'application (PA, PB), les résultats du programme d'application (PA, PB) étant interchangeables entre les unités d'évaluation (A, B) via le canal de communication (KK).
